# EUROPÄISCHE PATENTSCHRIFT

(11) **EP 2 676 041 B1**
(45) Veröffentlichungstag und Bekanntmachung des Hinweises auf die Patenterteilung: **13.07.2016**
(21) Anmeldenummer: 12704259.6
(22) Anmeldetag: 10.02.2012
(51) Int. Cl.: F16B 37/12

(54) **LASTAUFNAHME- UND BEFESTIGUNGSBUCHSE ZUR BEFESTIGUNG EINER LAST AN EINEM TRAGBAUTEIL**
LOAD-BEARING AND FASTENING BUSH FOR FASTENING A LOAD TO A SUPPORTING COMPONENT
DOUILLE DE SUSPENSION DE CHARGE ET DE FIXATION POUR FIXER UNE CHARGE SUR UN ÉLÉMENT PORTEUR

(30) Priorität: 14.02.2011 DE 202011002710 U
(43) Veröffentlichungstag der Anmeldung: 25.12.2013
(73) Patentinhaber: K&F Beteiligungen GmbH, 30179 Hannover (DE)
(72) Erfinder: FIGULA, André, 30453 Hannover (DE)
(74) Vertreter: Kröncke, Rolf
(86) Internationale Anmeldenummer: PCT/EP2012/052303
(87) Internationale Veröffentlichungsnummer: WO 2012/110419

(56) Entgegenhaltungen:
- CH-A- 250 594
- DE-A1- 4 204 828
- DE-A1-102005 031 040
- DE-U1- 20 212 656
- FR-A- 388 637
- GB-A- 899 672

## Beschreibung

Die Erfindung betrifft eine Lastaufnahme- und Befestigungsbuchse zur Befestigung einer Last an einem Tragbauteil gemäß den weiteren Merkmalen des Anspruchs 1. Lastaufnahme- und Befestigungsbuchsen zur Befestigung einer Last an einem Tragbauteil werden in verschiedenen Bereichen verwendet, wie z.B. aus der gattungsbildenden FR 388 637 A bekannt.

Einen Anwendungsbereich stellen Befestigungsaufgaben dar, bei denen schwere Lasten schnell und sicher befestigt und ebenso schnell und sicher wieder demontiert werden müssen, z. B. beim Aufbau und Abbau von Bühnenaufbauten oder auf Messeständen. Im Bereich der Bühnentechnik ist es z. B. erforderlich, dass schwere Lautsprecherboxen und Scheinwerfer an einem Traggerüst "fliegend" aufgehängt werden. Man spricht von fliegender Aufhängung, wenn die zu befestigende Last z. B. an einem Seil, einer Kette, einem Stahlseil oder einem starren Verbindungsglied aufgehängt ist.

Bekannt ist die Befestigung einer Last mittels einer in die Last einschraubbaren Aufnahmebuchse und einem Kugeltragbolzen, der in die Aufnahmebuchse eingesetzt und darin fixiert werden kann. Der Kugeltragbolzen kann über eine manuell leicht zu lösende Arretierung, die nachfolgend noch näher beschrieben wird, auf einfache Weise in der Aufnahmebuchse arretiert und daraus wieder gelöst werden. Die Aufnahmebuchse wird dabei fest in oder an der aufzuhängenden Last befestigt, z. B. durch eine Verschraubung.

Die zuvor beschriebene Befestigung mittels Kugeltragbolzen ist aufgrund der verhältnismäßig aufwendigen Konstruktion der Kugeltragbolzen relativ teuer. In vielen Fällen besteht der Wunsch, eine kostengünstigere Befestigung durchführen zu können.

Der Erfindung liegt daher die Aufgabe zugrunde, eine Möglichkeit zur Befestigung einer Last an einem Tragbauteil anzugeben, die bei sicherer Befestigung auch von schweren Lasten dem Wunsch der Anwender nach einer preisgünstigeren Befestigung nachkommt.

Diese Aufgabe wird durch eine Lastaufnahme- und Befestigungsbuchse gemäß Anspruch 1 gelöst.

Die Erfindung hat den Vorteil, eine universelle Befestigung der Last an dem Tragbauteil wahlweise durch eine Gewindeschraube oder durch einen Kugelhaltebolzen zu ermöglichen. Die Auswahl kann von einem Anwender zu einem Zeitpunkt getroffen werden, zu dem die Lastaufnahme- und Befestigungsbuchse bereits fest mit der Last verbunden ist und nicht mehr ohne weiteres ausgetauscht werden kann. Der Anwender kann je nach Bedürfnissen als Befestigungsmittel entweder ein Lastaufnahme- und Befestigungsmittel mit einer Gewindeschraube oder ein Lastaufnahme- und Befestigungsmittel mit einem Kugelhaltebolzen einsetzen. Als Lastaufnahme- und Befestigungsmittel mit einem Kugelhaltebolzen können wahlweise Kugelsperrbolzen oder Kugeltragbolzen verwendet werden. Sofern Bedarf daran besteht, eine dauerhafte und insbesondere sehr kostengünstige Befestigung der Last an dem Tragbauteil vorzunehmen, wird die Wahl auf das Lastaufnahme- und Befestigungsmittel mit der Gewindeschraube fallen. In anderen Fällen, in denen eine schnelle Befestigung und ein schnelles Lösen der Last eine höhere Priorität als die entstehenden Kosten haben, wird die Wahl auf ein Lastaufnahme- und Befestigungsmittel mit einem Kugelhaltebolzen fallen. Die erfindungsgemäße Lastaufnahme- und Befestigungsbuchse ist vorteilhafter Weise für beides geeignet.

Kugeltragbolzen sind durch eine am Kugelhaltebolzen befestigte Tragöse, die z. B. verschwenkbar sein kann, gekennzeichnet. In die Tragöse kann z. B. ein Seil eingefädelt werden oder ein Karabinerhaken eingehakt werden. Ein Kugelsperrbolzen weist dagegen einen Haltekopf auf, der z. B. ähnlich einem Schraubenkopf einer Zylinderkopfschraube ausgebildet sein kann.

Die Anlagekante, hinter der die Kugeln des Kugelhaltebolzens anzuordnen sind, kann z. B. durch den letzten Gewindegang des in dem inneren Hohlraum vorgesehenen Innengewindes realisiert werden. In diesem Fall lässt sich trotz der geringfügigen Schräge des letzten Gewindegangs bereits eine befriedigende Fixierung des Kugelhaltebolzens in dem inneren Hohlraum realisieren. Eine noch haltbarere Befestigung des Kugelhaltebolzens in dem inneren Hohlraum kann realisiert werden, wenn die Anlagekante möglichst rechtwinklig zur Längsachse des länglichen Körpers der Lastaufnahme- und Befestigungsbuchse verläuft. Die größte Haltbarkeit wird bei einem 90°-Winkel erreicht, wobei auch Winkel von mehr als 90° möglich sind.

Die erfindungsgemäße Lastaufnahme- und Befestigungsbuchse eignet sich zur Befestigung beliebiger Lasten, z. B. für Lautsprecherboxen.

Gemäß einer vorteilhaften Weiterbildung der Erfindung ist die Lastaufnahme- und Befestigungsbuchse auf der der ersten Öffnung abgewandten Stirnseite geschlossen ausgebildet. Dies hat den Vorteil, dass die Lastaufnahme- und Befestigungsbuchse auf einfache Weise für Anwendungen verwendbar ist, bei denen es auf eine Dichtheit der Last, die mit der Lastaufnahme- und Befestigungsbuchse versehen ist, ankommt. Beispielhaft sei hierzu eine Lautsprecherbox angegeben, die aus akustischen Gründen zumindest weitgehend luftdicht sein soll. Durch die einseitig geschlossen ausgeführte Ausbildung der Lastaufnahme- und Befestigungsbuchse sind keine zusätzlichen Bauelemente erforderlich, um etwaige Öffnungen zu verschließen.

Gemäß einer vorteilhaften Weiterbildung der Erfindung ist der innere Hohlraum als ein durch die Lastaufnahme- und Befestigungsbuchse in Längsrichtung durchgehender Hohlraum ausgebildet, der auf der der ersten Öffnung abgewandten Stirnseite der Lastaufnahme- und Befestigungsbuchse in eine zweite Öffnung mündet. Auf diese Weise entsteht ein durchgehender Hohlraum, was den Vorteil hat, dass die Lastaufnahme- und Befestigungsbuchse kostengünstiger hergestellt werden kann als bei einseitig geschlossener Ausführung. Ein weiterer Vorteil ist, dass die zweite Öffnung zur Befestigung anderer Befestigungsmittel, wie z. B. einer zweiten Gewindeschraube, genutzt werden kann. Sofern es auf eine luftdichte Befestigung ankommt, kann die Lastaufnahme- und Befestigungsbuchse auf der Seite, an der sich die zweite Öffnung befindet, z. B. mittels einer Hutmutter verschlossen werden.

Die erfindungsgemäße Lastaufnahme- und Befestigungsbuchse erlaubt hinsichtlich ihrer äußeren Gestaltung viele Freiheitsgrade. So kann die Lastaufnahme- und Befestigungsbuchse an der Außenseite glatt oder mit einer umlaufenden Nut für eine Sprengring-Befestigung ausgebildet sein. Die Lastaufnahme- und Befestigungsbuchse kann an der Außenseite z. B. vollständig zylindrisch ausgebildet sein. Vorteilhaft ist auch das Vorsehen eines Schraubenkopfes an einer Seite der Lastaufnahme- und Befestigungsbuchse, z. B. in Form eines Senkkopfes oder eines Sechskant-Kopfes.

Gemäß einer vorteilhaften Weiterbildung der Erfindung weist die Lastaufnahme- und Befestigungsbuchse an der Außenseite ein Außengewinde auf, über das die Lastaufnahme- und Befestigungsbuchse in ein Innengewinde einschraubbar ist. Das Außengewinde erstreckt sich wenigstens über einen Teil der Längserstreckung der Lastaufnahme- und Befestigungsbuchse. Möglich ist auch, dass sich das Außengewinde über die gesamte Längserstreckung der Lastaufnahme- und Befestigungsbuchse erstreckt. Auf das Außengewinde kann z. B. eine Mutter geschraubt werden, z. B. die zuvor erwähnte Hutmutter. Dies erlaubt eine einfache und schnelle Befestigung der Lastaufnahme- und Befestigungsbuchse an der Last.

Gemäß der Erfindung weist der innere Hohlraum wenigstens über einen Teil seiner Längserstreckung einen innengewindefreien Abschnitt auf. Es können auch mehrere innengewindefreie Abschnitte vorgesehen sein. Dies hat den Vorteil, dass vielfältige Ausführungsmöglichkeiten der Lastaufnahme- und Befestigungsbuchse möglich sind, wie nachfolgend anhand der diversen Ausführungsbeispiele beschrieben wird. Der innengewindefreie Abschnitt erlaubt insbesondere günstige Platzierungen und Ausgestaltungen der Anlagekante für die Kugeln des Kugelhaltebolzens.

Gemäß einer vorteilhaften Weiterbildung der Erfindung ist der innengewindefreie Abschnitt von der ersten Öffnung aus betrachtet hinter dem mit dem Innengewinde versehenen Abschnitt des inneren Hohlraums angeordnet. Dies hat den Vorteil, dass von der ersten Öffnung aus gesehen eine Gewindeschraube sofort auf das Innengewinde trifft, so dass insbesondere auch Gewindeschrauben mit relativ kurzem Gewindebolzen verwendet werden können. Ein weiterer Vorteil ist, dass handelsübliche Kugelhaltebolzen, die in der Regel eine relativ große Länge des Bolzenabschnitts aufweisen, eingesetzt werden können und sicher fixiert sind.

Gemäß der Erfindung weist der innengewindefreie Abschnitt eine Passbohrung auf oder ist als Passbohrung ausgebildet. Der Innendurchmesser der Passbohrung ist dabei unter Berücksichtigung eines für Kugelhaltebolzen maximal zulässigen Spiels dimensioniert. Dies erlaubt eine Verankerung eines Kugelhaltebolzens in der Lastaufnahme- und Befestigungsbuchse mit größtmöglicher Haltekraft.

Vorteilhaft ist die Passbohrung im Falle eines 5/16-Zoll Kugelhaltebolzens mit einem Bohrungsdurchmesser von 8 mm bei einer Toleranz von +0,04 und -0,06 mm gefertigt. Für die Verwendung von metrischen Kugelhaltebolzen ab 10 mm Durchmesser wird vorteilhaft eine Passung H11 gemäß DIN ISO 286 verwendet. Hierdurch kann das für Kugelhaltebolzen maximal zulässige Spiel sichergestellt werden.

Gemäß einer vorteilhaften Weiterbildung der Erfindung ist jeweils ein Innengewinde-Abschnitt in dem inneren Hohlraum auf jeder Seite des innengewindefreien Abschnitts angeordnet. Dies erlaubt vorteilhaft eine beidseitige Anordnung von jeweils einem Lastaufnahme- und Befestigungsmittel. Die zwei Lastaufnahme- und Befestigungsmittel können in beliebiger Kombination die bereits erwähnte Gewindeschraube oder den Kugelhaltebolzen aufweisen, d.h. zweimal Gewindeschraube, zweimal Kugelhaltebolzen oder eine Gewindeschraube und ein Kugelhaltebolzen. Vorteilhaft ist es, zumindest ein Lastaufnahme- und Befestigungsmittel mit einer Gewindeschraube zu verwenden.

Gemäß einer vorteilhaften Weiterbildung der Erfindung ist die Lastaufnahme- und Befestigungsbuchse als Flugpunkt ausgebildet. Dies erlaubt den Einsatz der erfindungsgemäßen Lastaufnahme- und Befestigungsbuchse für fliegende Aufhängungen, insbesondere im Bereich von Bühnen- und Messeaufbauten. Die Lastaufnahme- und Befestigungsbuchse ist dadurch besonders geeignet zur fliegenden Aufhängung von Lautsprecherboxen.

Gemäß einer vorteilhaften Weiterbildung der Erfindung weist die Lastaufnahme- und Befestigungsbuchse auf der Seite der ersten Öffnung einen Senkkopf auf.

Die Erfindung betrifft ferner eine Befestigungseinrichtung zur Befestigung einer Last an einem Tragbauteil, mit einer Lastaufnahme- und Befestigungsbuchse der zuvor beschriebenen Art und einem Lastaufnahme- und Befestigungsmittel mit einer ein Schraubengewinde aufweisenden Gewindeschraube, die in das Innengewinde der Lastaufnahme- und Befestigungsbuchse einschraubbar ist.

Ferner betrifft die Erfindung eine Befestigungseinrichtung zur Befestigung einer Last an einem Tragbauteil, mit einer Lastaufnahme- und Befestigungsbuchse der zuvor beschriebenen Art und einem Lastaufnahme- und Befestigungsmittel mit einem Kugelhaltebolzen, der in den inneren Hohlraum der Lastaufnahme- und Befestigungsbuchse derart einsetzbar ist, dass die Kugeln des Kugelhaltebolzens von der ersten Öffnung aus gesehen hinter der Anlagekante platziert sind.

Die Erfindung wird nachfolgend anhand von Ausführungsbeispielen unter Verwendung von Zeichnungen näher erläutert.

Es zeigen:
- Figur 1 -: eine Lastaufnahme- und Befestigungsbuchse mit einem Tragbauteil und einer Hutmutter und
- Figur 2 -: eine Befestigungseinrichtung mit einem Kugelhaltebolzen und
- Figur 3 -: verschiedene Anwendungsmöglichkeiten der Lastaufnahme- und Befestigungsbuchse gemäß Figur 1 und
- Figuren 4 bis 10: - weitere Ausführungsformen der Lastaufnahme- und Befestigungsbuchse, wobei die Ausführungsform nach Figur 5 nicht unter die beanspruchte Erfindung fällt.

In den Figuren werden für einander entsprechende Elemente gleicher Bezugszeichen verwendet.

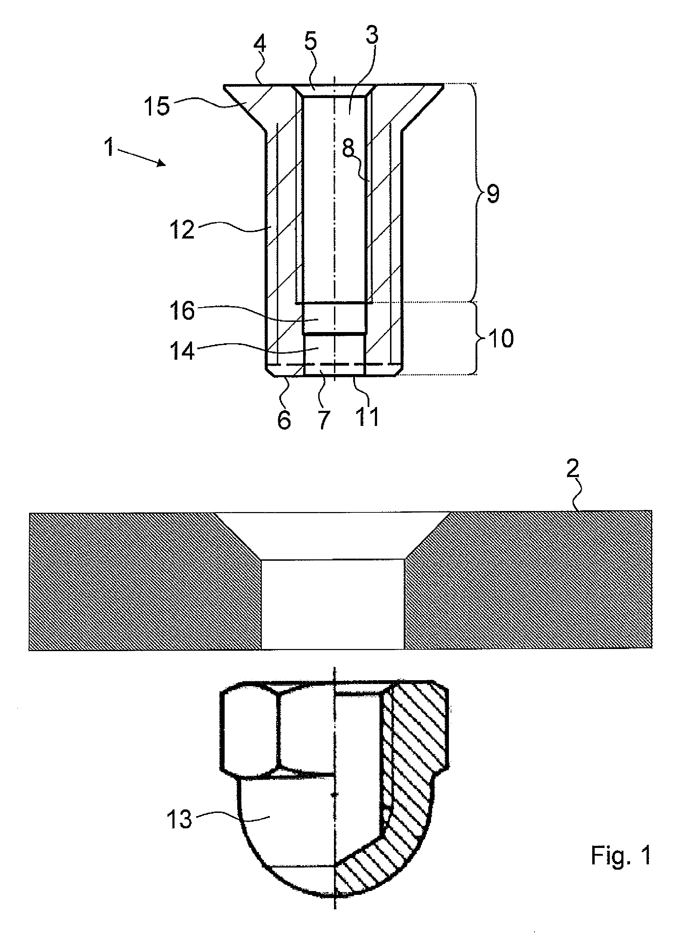

Die Figur 1 zeigt eine Lastaufnahme- und Befestigungsbuchse 1, nachfolgend kurz als Buchse bezeichnet, ein Tragbauteil 2 sowie eine Hutmutter 13. Das Tragbauteil 2 kann z. B. eine Gehäusewand einer Lautsprecherbox sein. Die Buchse 1 sowie das Tragbauteil 2 sind in geschnittener Darstellung wiedergegeben, die Hutmutter 13 in teilweise geschnittener Darstellung.

Die Buchse 1 weist an ihrer Außenseite ein Außengewinde 12 sowie an einer oben liegenden Stirnseite 4 einen Senkkopf 15 auf. Die Buchse 1 weist einen inneren Hohlraum 3 auf, der sich längs durch die einen länglichen Körper bildende Buchse 1 hindurch erstreckt. Der innere Hohlraum 3 mündet auf der oberen Stirnseite 4 in eine erste Öffnung 5 und an einer unteren Stirnseite 6, die der oberen Stirnseite 4 gegenüber liegt, in eine untere Öffnung 7. Der innere Hohlraum 3 weist in einem Abschnitt 9 seiner Längserstreckung ein Innengewinde 8 und in einem weiteren, darunter liegenden Bereich einen innengewindefreien Abschnitt 10 auf. Der innengewindefreie Abschnitt 10 des inneren Hohlraums 3 ist in Form einer Stufenbohrung ausgebildet. Hierbei schließt sich an den Abschnitt 9 zunächst ein zylindrischer Abschnitt 16 an, der als verbleibender Bestandteil einer zur Herstellung des Innengewindes 8 vorgesehen Bohrung erkennbar ist. Hieran schließt sich unterhalb des zylindrischen Abschnitts 16 ein zweiter zylindrischer Abschnitt 14 an, der als Passbohrung ausgebildet ist. Der die Passbohrung 14 an der unteren Stirnseite 6 umgebende Bereich dient als Anlagekante 11 für die Kugeln eines Kugelhaltebolzens.

Die Buchse 1 kann in die Durchgangsöffnung des Tragbauteils 2 eingesetzt werden und mittels der Hutmutter 13, die ein zu dem Außengewinde 12 passendes Innengewinde aufweist, mit dem Tragbauteil 2 verschraubt werden.

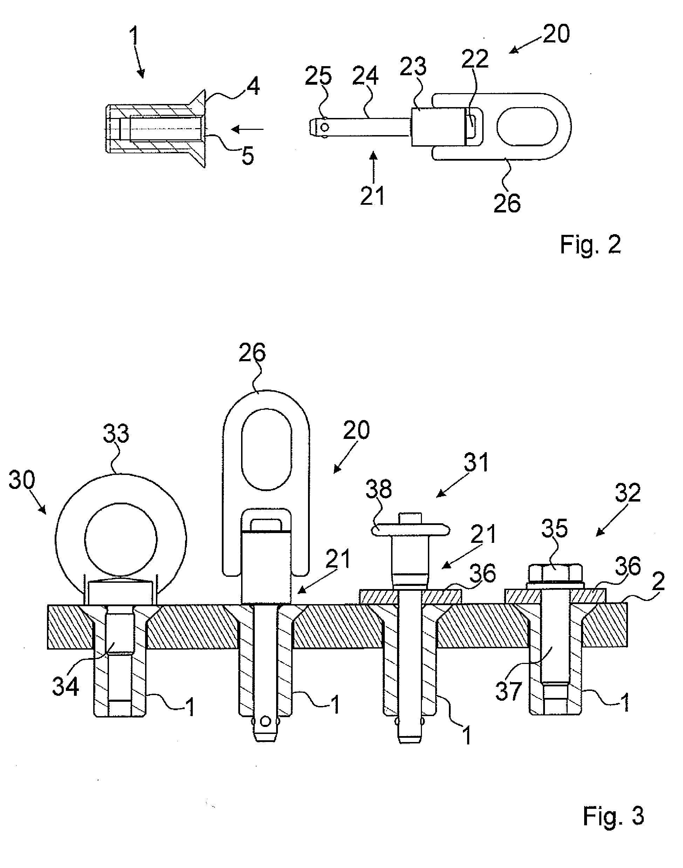

Die Figur 2 zeigt eine Anordnung mit der Buchse 1 gemäß Figur 1 und einem Kugeltragbolzen 20. Der Pfeil zeigt dabei die Einführrichtung des Kugeltragbolzens in die Buchse 1 an. Der Kugeltragbolzen 20 weist einen Kugelhaltebolzen 21 mit einer daran befestigten Tragöse 26 auf. Der Kugelhaltebolzen 21 weist einen Bolzenkopf 23 sowie einen Bolzenabschnitt 24 auf. Der Bolzenabschnitt 24 ist mit geringerem Durchmesser als der Bolzenkopf 23 ausgebildet. Die Buchse 1 ist hinsichtlich ihrer Länge und ihres Durchmessers zum Einführen des Bolzenabschnitts 24 in den inneren Hohlraum 3 der Buchse 1 ausgebildet. Der Kugelhaltebolzen 21 weist eine integrierte Arretiermechanik auf, die hinsichtlich der von außen sichtbaren Teile mehrere am vom Bolzenkopf 23 abgewandten Ende des Bolzenabschnitts 24 angeordnete Kugeln 25 sowie einen am Bolzenkopf 23 angeordneten Betätigungstaster 22 aufweist. Der Betätigungstaster 22 ist gegen Federkraft in den Bolzenkopf 23 zumindest teilweise eindrückbar. Durch Eindrücken des Betätigungstasters 22 werden die Kugeln 25 aus einer arretierten Position gelöst und liegen dann sozusagen lose in dem Bolzenabschnitt 24. In diesem Zustand kann der Bolzenabschnitt 24 in den inneren Hohlraum 3 eingeführt werden. Die Kugeln 25 werden dabei nach innen gedrückt und behindern das Einführen des Bolzenabschnitts 24 in den inneren Hohlraum 3 nicht. Nach Lösen des Betätigungstasters 22 werden die Kugeln 25 durch eine mit dem Betätigungstaster 22 verbundene, durch den Kugelhaltebolzen 21 geführte Betätigungsstange in eine arretierte Position nach außen gedrückt, und zwar in Folge der Federbelastung des Betätigungstasters 22. In diesem Zustand ist der Kugelhaltebolzen 21 bei vollständig in den inneren Hohlraum 3 eingeführtem Bolzenabschnitt 24 in der Buchse 1 fixiert.

Die Figur 3 zeigt beispielhaft mehrere Verwendungsmöglichkeiten der beschriebenen Buchse 1. Dargestellt ist zunächst die Verwendung der Buchse 1 mit einer Ringschraube 30, die eine ringförmige Befestigungsöse 33 sowie eine mit der Befestigungsöse 33 verbundene Gewindeschraube 34 aufweist. Die Gewindeschraube 34 ist in das Innengewinde 8 der Buchse 1 eingeschraubt. An die Befestigungsöse 33 können, ähnlich wie bei der Tragöse 26, Seile oder Karabinerhaken befestigt werden.

Des Weiteren zeigt die Figur 3 eine Befestigung des anhand der Figur 2 beschriebenen Kugeltragbolzens 20 in der Buchse 1. Weiterhin ist beispielhaft die Befestigung eines Kugelsperrbolzens 31 in der Buchse 1 dargestellt. Der Kugelsperrbolzen weist einen Kopf 38 auf. Mittels des Kopfes 38 ist ein Anbauteil 36, das an dem Tragbauteil 2 befestigt werden soll, fixiert.

Die Figur 3 zeigt ferner die Verwendung der Buchse 1 für eine konventionelle Schraubbefestigung. In die Buchse 1 ist eine mit einem Sechskant-Kopf 35 versehene Schraube 32 eingeschraubt, die eine Gewindeschraube 37 aufweist. Mittels der Schraube 32 ist ebenfalls ein Anbauteil 36 an dem Tragbauteil 2 befestigt.

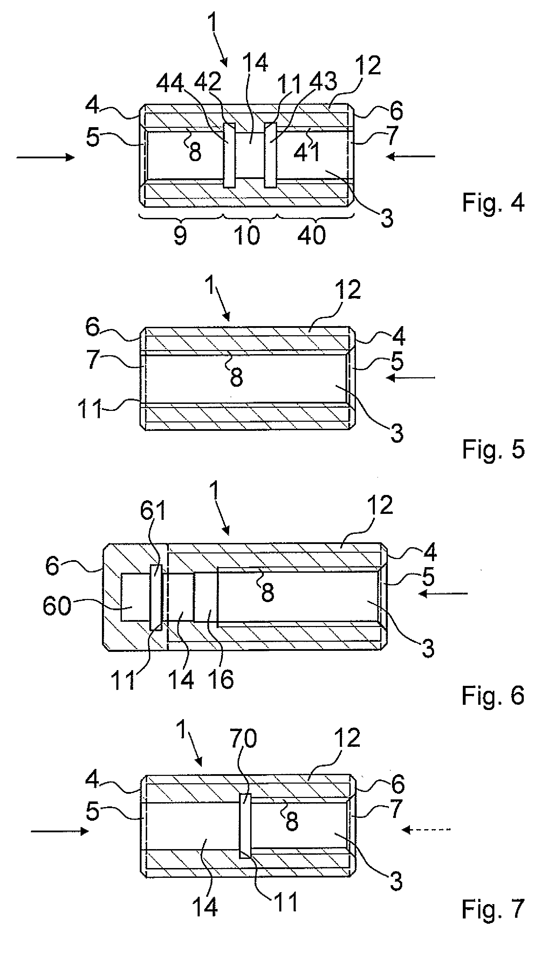

Die Figuren 4 bis 10 zeigen weitere vorteilhafte Ausgestaltungen der Buchse 1. Die anhand der Figuren 4 bis 10 beschriebenen Teilmerkmale, z. B. offenes oder geschlossenes Ende der Buchse, Außengewinde oder andere Befestigungsmöglichkeiten oder die Gestaltung des inneren Hohlraums 3 sind beliebig miteinander kombinierbar. Hieraus ergibt sich eine Vielzahl von Ausführungsmöglichkeiten der erfindungsgemäßen Buchse 1.

In den Figuren 4 bis 10 ist die jeweils mögliche Einführrichtung des Kugelhaltebolzens 21 mit in durchgezogener Linie ausgeführten Pfeilen dargestellt. Soweit die Einführungsrichtung der Gewindeschraube 34, 37 davon abweicht, ist deren Einführrichtung mit einem gestrichelten Pfeil dargestellt.

Die Figur 4 zeigt eine Ausführungsform der Buchse 1, die beidseitig verwendbar ist, sowohl im Hinblick auf das Einführen eines Kugelhaltebolzens als auch einer Gewindeschraube. Vorgesehen ist etwa im mittleren Bereich des inneren Hohlraums 3 ein innengewindefreier Abschnitt 10. Auf beiden Seiten des innengewindefreien Abschnitts 10 ist jeweils ein Abschnitt 9, 40 mit einem jeweiligen Innengewinde 8, 41 vorgesehen. In dem innengewindefreien Abschnitt 10 ist etwa mittig ein mit der Passbohrung 14 versehener Bereich angeordnet, der auf beiden Seiten jeweils von einer einstichartigen Innennut 43, 44 begrenzt wird. Wie erkennbar ist, weisen die Innennuten 43, 44 einen größeren Innendurchmesser auf als die Passbohrung 14. Die Innennuten 43, 44 bilden zusammen mit der Passbohrung 14 jeweilige Anlagekanten 11, 42 für die Kugeln 25 eines Kugelhaltebolzens 21. Sofern der Kugelhaltebolzen von der linken Stirnseite 4 eingeführt wird, erfolgt die Einführung des Bolzenabschnitts 24 soweit, dass die Kugeln 25 hinter der Anlagekante 11 angeordnet werden. Erfolgt ein Einführen des Kugelhaltebolzens von der rechten Stirnseite 6, wird der Bolzenabschnitt 24 soweit eingeführt, dass die Kugeln 25 hinter der Anlagekante 42 angeordnet sind. Alternativ kann von einer oder von beiden Stirnseiten 6, 4 eine Gewindeschraube 34, 37 eingeschraubt werden.

Wie ferner in der Figur 4 erkennbar ist, weist die Buchse 1 über ihre gesamte Längserstreckung ein Außengewinde 12 auf. Ein Schraubenkopf oder Senkkopf ist nicht vorgesehen. Die Buchse 1 kann beispielsweise über zwei Muttern an dem Tragbauteil befestigt werden.

Die Figur 5 zeigt eine besonders kostengünstig herstellbare Buchse, die nicht unter die beanspruchte Erfindung fällt und die ebenso wie die Ausführungsform gemäß Figur 4 ein durchgehendes Außengewinde 12 und keinen Schraubenkopf oder Senkkopf aufweist. Die Befestigung der Buchse an dem Tragbauteil erfolgt wie bei der Buchse gemäß Figur 4. Das Innengewinde 8 der Buchse 1 gemäß Figur 5 ist wie das Außengewinde 12 über die volle Längserstreckung des inneren Hohlraums 3 ausgebildet. Das Innengewinde 8 ist derart dimensioniert, dass ein handelsüblicher Kugelhaltebolzen 21 hindurchgeführt und an der Anlagekante 11 arretiert werden kann. Die Kugeln 25 des Kugelhaltebolzens 21 kommen dann an dem letzten Gewindegang des Innengewindes 8 zur Anlage. Das Innengewinde 8 entspricht dabei näherungsweise der für den Kugelhaltebolzen vorgesehenen Passung. Alternativ kann in das Innengewinde 8 eine Gewindeschraube 34, 37 eingeschraubt werden.

Die Figur 6 zeigt eine Buchse 1 mit einer einseitig geschlossenen Ausführung des inneren Hohlraums 3. Wie erkennbar ist, ist auf der Stirnseite 6 die Buchse 1 hutförmig geschlossen ausgebildet. Der innere Hohlraum 3 entspricht hinsichtlich des Innengewindes 8, des zylindrischen Abschnitts 16 und der Passbohrung 14 der bereits anhand der Figur 1 erläuterten Ausführungsform. An die Passbohrung 14 schließt sich eine einstichartige Innennut 61 an, die einen größeren Innendurchmesser aufweist als die Passbohrung 14. Hierdurch wird die Anlagekante 11 gebildet. Hinter der Innennut 61 kann sich der innere Hohlraum 3 noch weiter bis in einen Bereich 60 hinein erstrecken. Der Bereich 60 kann hinsichtlich seines Innendurchmessers der Passbohrung 14 entsprechen, so dass beide Bereiche 14, 60 in demselben Arbeitsschritt hergestellt werden können. Hinsichtlich der äußeren Befestigung entspricht die Buchse 1 gemäß Figur 6 den Buchsen gemäß den Figuren 4 und 5.

Die Figur 7 zeigt eine Ausführungsform der Buchse 1, bei der von einer Seite, nämlich der Stirnseite 4, ein Kugelhaltebolzen einsetzbar ist. Von der anderen Seite, der Stirnseite 6, ist eine Gewindeschraube einschraubbar. Hierzu weist die Buchse 1 etwa im mittleren Bereich eine einstichartige Innennut 70 auf, die einen größeren Innendurchmesser aufweist als die sich von der Stirnseite 4 bis zu der Innennut 70 erstreckende Passbohrung 14. Rechts von der Innennut 70 ist das bereits erläuterte Innengewinde 8 in dem inneren Hohlraum 3 vorgesehen. Durch die Innennut 70 wird zusammen mit der Passbohrung 14 die Anlagekante 11 gebildet. Hinsichtlich der äußeren Befestigung entspricht die Buchse 1 gemäß Figur 7 den zuvor erläuterten Buchsen gemäß den Figuren 4 bis 6.

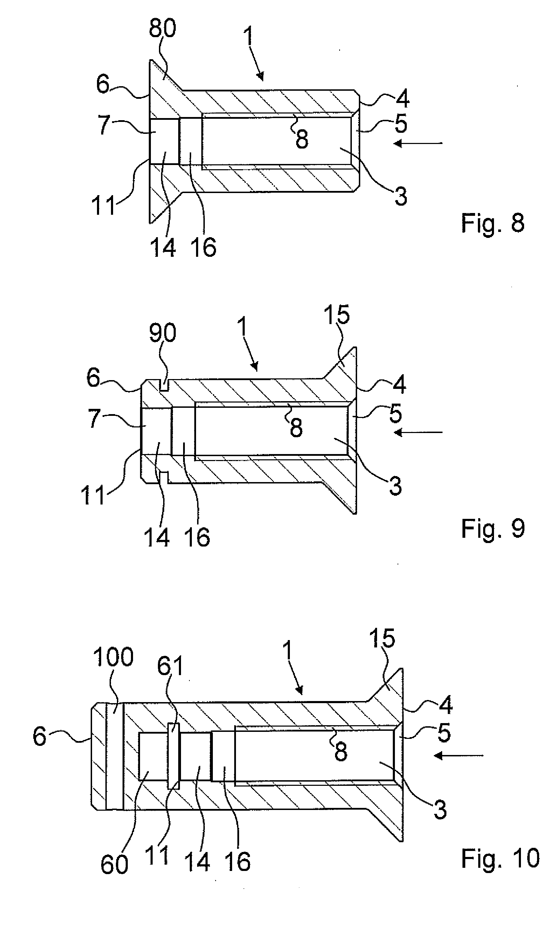

Die Figur 8 zeigt eine Ausführungsform der Buchse 1, bei der ein Senkkopf 80 nicht wie bei der Figur 1 an der Stirnseite 4, sondern auf der gegenüberliegenden Stirnseite 6 der Buchse 1 vorgesehen ist. Die Buchse 1 weist an der Außenseite zudem kein Gewinde auf, sondern eine im Wesentlichen glatte Oberfläche. Die Buchse 1 gemäß Figur 8 ist zur Befestigung mittels einer Einpressverbindung an dem Tragbauteil 2 ausgelegt. Das Einführen des Kugelhaltebolzens 21 oder alternativ der Gewindeschraube 34, 37 erfolgt bei der Buchse 1 gemäß Figur 8 wie bei der Buchse 1 gemäß Figur 1 von der Stirnseite 4 aus. Hinsichtlich der Ausgestaltung des inneren Hohlraums 3 entspricht die Buchse 1 gemäß Figur 8 ebenfalls der Buchse 1 gemäß Figur 1.

Die Figur 9 zeigt eine Ausführungsform der Buchse 1, die bis auf die nachfolgend genannten Unterschiede der Buchse 1 gemäß Figur 1 entspricht. An der Außenseite weist die Buchse 1 wiederum kein Außengewinde auf, sondern eine im Wesentlichen glatte Oberfläche. In der Nähe der Stirnseite 6 ist eine um den Außenumfang umlaufende Nut 90 vorgesehen. In der Nut 90 kann zur Befestigung der Buchse 1 in dem Tragbauteil 2 ein Sprengring befestigt werden.

Die Figur 10 zeigt eine Ausführungsform der Buchse 1, die hinsichtlich der Ausgestaltung des inneren Hohlraums 3 der Ausführungsform gemäß Figur 6 entspricht. Die Buchse 1 ist daher ebenfalls an der Stirnseite 6 geschlossen ausgebildet. An der Außenseite weist die Buchse 1 kein Außengewinde, sondern eine im Wesentlichen glatte Oberfläche auf. In der Nähe der Stirnseite 10 weist die Buchse 1 eine Durchgangsbohrung 10 auf, die quer zur Längsachse der Buchse 1 verläuft und etwa zentral durch die Buchse 1 hindurchgeht. Die Befestigung der Buchse 1 gemäß Figur 10 erfolgt durch Einsetzen eines Splints in die Durchgangsbohrung 10.

## Patentansprüche

1. Lastaufnahme- und Befestigungsbuchse (1) zur Befestigung einer Last an einem Tragbauteil (2), wobei die Lastaufnahme- und Befestigungsbuchse (1) als länglicher Körper mit einem inneren Hohlraum (3) ausgebildet ist, der zumindest an einer Stirnseite (4) des länglichen Körpers eine erste Öffnung (5) aufweist, wobei in dem inneren Hohlraum (3) ein Innengewinde (8) vorgesehen ist, das sich wenigstens über einen Teil (9) der Längserstreckung des inneren Hohlraums (3) erstreckt, und wobei der innere Hohlraum (3) zur alternativen Aufnahme eines Schraubengewindes eines eine Gewindeschraube (34, 37) aufweisenden Lastaufnahme- und Befestigungsmittels (30, 32), dessen Gewindeschraube (34, 37) in das Innengewinde (8) einschraubbar ist, oder eines einen Kugelhaltebolzen (21) aufweisenden Lastaufnahme- und Befestigungsmittels (20, 31) eingerichtet ist, wobei zur lastaufnehmenden Befestigung des Kugelhaltebolzens (21) der innere Hohlraum (3) eine von der ersten Öffnung (5) fort weisende Anlagekante (11) aufweist, so dass die Kugeln (25) des Kugelhaltebolzens (21) bei in den inneren Hohlraum (3) eingeführtem Bolzenabschnitt (24) des Kugelhaltebolzens (21) von der ersten Öffnung (5) aus gesehen hinter der Anlagekante (11) platzierbar sind, **dadurch gekennzeichnet, dass** der innere Hohlraum (3) wenigstens über einen Teil seiner Längserstreckung einen innengewindefreien Abschnitt (10) aufweist, wobei der innengewindefreie Abschnitt (10) zwischen der Anlagekante (11) und dem mit den Innengewinde (8) versehenen Abschnitt (9) des inneren Hohraums (3) angeordnet ist und sich von der Anlagekante (11) bis zu dem mit dem Innengewinde (8) versehenen Abschnitt (9) erstreckt, wobei der innengewindefreie Abschnitt (10) eine Passbohrung (14) aufweist oder als Passbohrung (14) ausgebildet ist, deren Innendurchmesser unter Berücksichtigung eines für Kugelhaltebolzen maximal zulässigen Spiels dimensioniert ist, wobei ein die Passbohrung (14) umgebender Bereich die Anlagekante (11) bildet, oder **dadurch gekennzeichnet, dass** jeweils ein Innengewinde-Abschnitt (9, 40) in dem inneren Hohlraum (3) auf jeder Seite des innengewindefreien Abschnitts (10) angeordnet ist.

2. Lastaufnahme- und Befestigungsbuchse nach Anspruch 1, **dadurch gekennzeichnet, dass** die Lastaufnahme- und Befestigungsbuchse (1) auf der der ersten Öffnung (5) abgewandten Stirnseite (6) geschlossen ausgebildet ist.

3. Lastaufnahme- und Befestigungsbuchse nach Anspruch 1, **dadurch gekennzeichnet, dass** der innere Hohlraum (3) als durch die Lastaufnahme- und Befestigungsbuchse (1) in Längsrichtung durchgehender Hohlraum ausgebildet ist, der auf der der ersten Öffnung (5) abgewandten Stirnseite (6) der Lastaufnahme- und Befestigungsbuchse (1) in eine zweite Öffnung (7) mündet.

4. Lastaufnahme- und Befestigungsbuchse nach einem der vorhergehenden Ansprüche, **dadurch gekennzeichnet, dass** die Lastaufnahme- und Befestigungsbuchse (1) an der Außenseite ein Außengewinde (12) aufweist, über das die Lastaufnahme- und Befestigungsbuchse (1) in ein Innengewinde, z. B. eine Mutter (13), einschraubbar ist, wobei sich das Außengewinde (12) wenigstens über einen Teil der Längserstreckung der Lastaufnahme- und Befestigungsbuchse (1) erstreckt.

5. Lastaufnahme- und Befestigungsbuchse nach Anspruch 1, **dadurch gekennzeichnet, dass** der innengewindefreie Abschnitt (10) von der ersten Öffnung (5) aus betrachtet hinter dem mit dem Innengewinde (8) versehenen Abschnitt (9) des inneren Hohlraums (3) angeordnet ist.

6. Lastaufnahme- und Befestigungsbuchse nach einem der vorhergehenden Ansprüche, **dadurch gekennzeichnet, dass** die Lastaufnahme- und Befestigungsbuchse (1) als Flugpunkt ausgebildet ist.

7. Lastaufnahme- und Befestigungsbuchse nach einem der vorhergehenden Ansprüche, **dadurch gekennzeichnet, dass** die Lastaufnahme- und Befestigungsbuchse (1) auf der Seite (4) der ersten Öffnung (5) einen Senkkopf (15) aufweist.

8. Befestigungseinrichtung zur Befestigung einer Last an einem Tragbauteil (2), mit einer Lastaufnahme- und Befestigungsbuchse (1) nach einem der vorhergehenden Ansprüche und einem Lastaufnahme- und Befestigungsmittel (30, 32) mit einer ein Schraubengewinde aufweisenden Gewindeschraube (34, 37), die in das Innengewinde (8) der Lastaufnahme- und Befestigungsbuchse (1) einschraubbar ist.

9. Befestigungseinrichtung zur Befestigung einer Last an einem Tragbauteil (2), mit einer Lastaufnahme- und Befestigungsbuchse (1) nach einem der vorhergehenden Ansprüche und einem Lastaufnahme- und Befestigungsmittel (20, 31) mit einem Kugelhaltebolzen (21), der in den inneren Hohlraum (3) der Lastaufnahme- und Befestigungsbuchse (1) derart einsetzbar ist, dass die Kugeln (25) des Kugelhaltebolzens (21) von der ersten Öffnung (6) aus gesehen hinter der Anlagekante (11) platziert sind.

## Claims

1. Load-bearing and fastening bush (1) for fastening a load to a supporting component (2), wherein the load-bearing and fastening bush (1) is designed as an elongate body with an inner cavity (3) which has a first opening (5) at least at an end face (4) of the elongate body, wherein an internal thread (8) is provided in the inner cavity (3) and extends at least over a part (9) of the longitudinal extent of the inner cavity (3), and wherein the inner cavity (3) is configured to either receive a screw thread of a load-bearing and fastening means (30, 32) which has threaded screw (34, 37), and the threaded screw (34, 37) of said means can be screwed into the internal thread (8), or a load-bearing and fastening means (20, 31) which has a ball retaining bolt (21), wherein the inner cavity (3) has a contact edge (11) directed away from the first opening (5) in order to fasten the ball retaining bolt (21) in a load-bearing manner, with the result that the balls (25) of the ball retaining bolt (21) can be placed behind the contact edge (11), as viewed from the first opening (5), when the bolt portion (24) of the ball retaining bolt (21) is inserted into the inner cavity (3), **characterized in that** the inner cavity (3) has an internal thread-free portion (10) at least over a part of its longitudinal extent, wherein the internal thread-free portion (10) is arranged between the contact edge (11) and the portion (9) of the inner cavity (3) that is provided with the internal thread (8) and extends from the contact edge (11) as far as the portion (9) provided with the internal thread (8), wherein the internal thread-free portion (10) has a locating bore (14) or is designed as a locating bore (14) of which the inside diameter is dimensioned with consideration to a maximum permissible play for ball retaining bolts, wherein a region surrounding the locating bore (14) forms the contact edge (11), or **characterized in that** an inner thread portion (9, 40) is arranged in the inner cavity (3) on each side of the internal thread-free portion (10).

2. Load-bearing and fastening bush according to Claim 1, **characterized in that** the load-bearing and fastening bush (1) is designed to be closed at the end face (6) facing away from the first opening (5).

3. Load-bearing and fastening bush according to Claim 1, **characterized in that** the inner cavity (3) is designed as a cavity which is continuous through the load-bearing and fastening bush (1) in the longitudinal direction and which opens into a second opening (7) at the end face (6) of the load-bearing and fastening bush (1) that faces away from the first opening (5).

4. Load-bearing and fastening bush according to one of the preceding claims, **characterized in that** the load-bearing and fastening bush (1) has on the outer side an external thread (12) via which the load-bearing and fastening bush (1) can be screwed into an internal thread, for example a nut (13), wherein the external thread (12) extends at least over a part of the longitudinal extent of the load-bearing and fastening bush (1).

5. Load-bearing and fastening bush according to Claim 1, **characterized in that** the internal thread-free portion (10) is arranged, as viewed from the first opening (5), behind the portion (9) of the inner cavity (3) that is provided with the internal thread (8).

6. Load-bearing and fastening bush according to one of the preceding claims, **characterized in that** the load-bearing and fastening bush (1) is designed as a flying point.

7. Load-bearing and fastening bush according to one of the preceding claims, **characterized in that** the load-bearing and fastening bush (1) has a counter sunk head (15) on the side (4) of the first opening (5).

8. Fastening device for fastening a load to a supporting component (2), comprising a load-bearing and fastening bush (1) according to one of the preceding claims and a load-bearing and fastening means (30, 32) , having a threaded screw (34, 37) which has a screw thread and which can be screwed into the internal thread (8) of the load-bearing and fastening bush (1).

9. Fastening device for fastening a load to a supporting component (2), comprising a load-bearing and fastening bush (1) according to one of the preceding claims and a load-bearing and fastening means (20, 31) having a ball retaining bolt (21) which can be inserted into the inner cavity (3) of the load-bearing and fastening bush (1) in such a way that the balls (25) of the ball retaining bolt (21) are placed behind the contact edge (11) as seen from the first opening (6).

## Revendications

1. Douille de réception de charge et de fixation (1) pour la fixation d'une charge sur un composant porteur (2), la douille de réception de charge et de fixation (1) étant réalisée sous la forme d'un corps allongé ayant une cavité interne (3), qui présente une première ouverture (5) au moins au niveau d'un côté frontal (4) du corps allongé, un filetage interne (8) étant prévu dans la cavité interne (3), lequel s'étend au moins sur une partie (9) de l'étendue longitudinale, de la cavité interne (3), et la cavité interne (3) étant prévue pour recevoir soit un filetage de vis d'un moyen de réception de charge et de fixation (30, 32) présentant une vis filetée (34, 37), dont la vis filetée (34, 37) peut être vissée dans le filetage interne (8), soit un moyen de réception de charge et de fixation (20, 31) présentant un boulon de retenue à billes (21), la cavité interne (3), pour la fixation avec réception de charge du boulon de retenue à billes (21), présentant une arête d'appui (11) faisant saillie depuis la première ouverture (5), de sorte que les billes (25) du boulon de retenue à billes (21), lorsque la portion de boulon (24) du boulon de retenue à billes (21) est introduite dans la cavité interne (3), puissent être placées derrière l'arête d'appui (11), vu à partir de la première ouverture (5), **caractérisée en ce que** la cavité interne (3) présente au moins une portion exempte de filetage interne (10) sur une partie de son étendue longitudinale, la portion exempte de filetage interne (10) étant disposée entre l'arête d'appui (11) et la portion (9) de la cavité interne (3) pourvue du filetage interne (8) et s'étendant depuis l'arête d'appui (11) jusqu'à la portion (9) pourvue du filetage interne (8), la portion exempte de filetage interne (10) présentant un alésage d'ajustement (14) ou étant réalisée sous forme d'alésage d'ajustement (14) dont le diamètre intérieur est dimensionné en tenant compte d'un jeu maximal admissible pour le boulon de retenue à billes, une région entourant l'alésage d'ajustement (14) formant l'arête d'appui (11), ou **caractérisée en ce qu'**une portion de filetage interne (9, 40) est à chaque fois disposée dans la cavité interne (3) de chaque côté de la portion exempte de filetage interne (10).

2. Douille de réception de charge et de fixation selon la revendication 1, **caractérisée en ce que** la douille de réception de charge et de fixation (1) est réalisée de manière fermée sur le côté frontal (6) opposé à la première ouverture (5).

3. Douille de réception de charge et de fixation selon la revendication 1, **caractérisée en ce que** la cavité interne (3) est réalisée sous forme de cavité traversant la douille de réception de charge et de fixation (1) dans la direction longitudinale, qui débouche, du côté frontal (6) de la douille de réception de charge et de fixation (1) opposé à la première ouverture (5), dans une deuxième ouverture (7).

4. Douille de réception de charge et de fixation selon l'une quelconque des revendications précédentes, **caractérisée en ce que** la douille de réception de charge et de fixation (1) présente, au niveau du côté extérieur, un filetage extérieur (12) par le biais duquel la douille de réception de charge et de fixation (1) peut être vissée dans un filetage interne, par exemple un écrou (13), le filetage extérieur (12) s'étendant au moins sur une partie de l'étendue longitudinale de la douille de réception de charge et de fixation (1).

5. Douille de réception de charge et de fixation selon la revendication 1, **caractérisée en ce que** la portion exempte de filetage (10), vu depuis la première ouverture (5), est disposée derrière la portion (9) de la cavité interne (3) pourvue du filetage interne (8).

6. Douille de réception de charge et de fixation selon l'une quelconque des revendications précédentes, **caractérisée en ce que** la douille de réception de charge et de fixation (1) est réalisée sous forme de point de fixation aérienne.

7. Douille de réception de charge et de fixation selon l'une quelconque des revendications précédentes, **caractérisée en ce que** la douille de réception de charge et de fixation (1) présente, du côté (4) de la première ouverture (5), une tête fraisée (15).

8. Dispositif de fixation pour la fixation d'une charge sur un composant porteur (2), comprenant une douille de réception de charge et de fixation (1) selon l'une quelconque des revendications, précédentes et un moyen de réception de charge et de fixation (30, 32) avec une vis filetée (34, 37) présentant un filetage de vis, qui peut être vissée dans le filetage interne (8) de la douille de réception de charge et de fixation (1).

9. Dispositif de fixation pour la fixation d'une charge à un composant porteur (2), comprenant une douille de réception de charge et de fixation (1) selon l'une quelconque des revendications précédentes et un moyen de réception de charge et de fixation (20, 31) avec un boulon de retenue à billes (21), qui peut être inséré dans la cavité interne (3) de la douille de réception de charge et de fixation (1) de telle sorte que les billes (25) du boulon de retenue à billes (21) soient placées derrière l'arête d'appui (11), vu depuis la première ouverture (6).
